# EUROPÄISCHE PATENTSCHRIFT

(11) **EP 2 818 582 B1**
(45) Veröffentlichungstag und Bekanntmachung des Hinweises auf die Patenterteilung: **18.03.2020**
(21) Anmeldenummer: 13173675.3
(22) Anmeldetag: 25.06.2013
(51) Int. Cl.: C25B 1/10, C25B 9/08, C25B 1/04, C25B 9/00, H01M 8/18, H01M 8/0276, H01M 8/0258, H01M 8/0267, H01M 8/0284

(54) **Fluidraumvorrichtung für eine Reaktionseinheit einer Redox-Vorrichtung**
Fluid space device for a reaction unit of a redox device
Dispositif à espace de fluide pour une unité de réaction d'un dispositif redox

(43) Veröffentlichungstag der Anmeldung: 31.12.2014
(73) Patentinhaber: Airbus Defence and Space GmbH, 82024 Taufkirchen (DE)
(72) Erfinder: JEHLE, Walter, 88263 Horgenzell (DE); KAUL, Dr. Stefan, 69502 Hermsbach (DE)
(74) Vertreter: Daub, Thomas

(56) Entgegenhaltungen:
- EP-A1- 2 445 046
- DE-A1-102011 100 768
- US-A- 4 654 134
- US-A1- 2006 266 641
- US-A1- 2008 143 061
- US-A1- 2012 156 584

## Beschreibung

### Stand der Technik

Die Erfindung betrifft eine Fluidraumvorrichtung nach dem Oberbegriff des Anspruchs 1. Es sind bereits Fluidraumvorrichtungen mit Dichtbereichen bekannt, in denen ein Dichtelement zwischen zwei parallel verlaufenden Wandelementen angeordnet ist. DE 10 2011 100768 A1 beschreibt eine elektrochemische Zelle, welche eine Anodenhalbschale und eine Kathodenhalbschale umfasst, die durch eine Membran voneinander separiert werden.

Die Aufgabe der Erfindung besteht insbesondere darin, eine gattungsgemäße Vorrichtung mit verbesserten Eigenschaften hinsichtlich einer einfachen Konstruktion bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fluidraumvorrichtung für eine Reaktionseinheit einer Redox-Vorrichtung, mit zumindest einem ersten Wandelement und zumindest einem zweiten Wandelement, die zumindest teilweise einen Fluidraum begrenzen, und mit einem Dichtbereich, der den Fluidraum gegen einen Fluidaustausch, insbesondere einen Gasaustausch, gegenüber einem Umgebungsraum abschließt.

Es wird vorgeschlagen, dass zumindest eines der Wandelemente in einem montierten Zustand in dem Dichtbereich zumindest eine Dichtkontur aufweist, die dazu vorgesehen ist, eine Dichtwirkung bereitzustellen und durch die sich ein Abstand der zumindest zwei Wandelemente im Dichtbereich gegenüber einem Umgebungsbereich des Dichtbereichs verringert.

Unter einer "Fluidraumvorrichtung" soll insbesondere eine Vorrichtung mit zumindest einem Fluidraum, der durch zumindest ein Wandelement begrenzt wird, verstanden werden. Unter einem "Fluidraum" soll insbesondere ein Raum zu einer Aufbewahrung und/oder Leitung eines Fluids, insbesondere eines Gases, verstanden werden, der zumindest weitgehend ein ungeregeltes Entweichen des Fluids in eine Umgebung vermeidet. Unter "zumindest weitgehend ein ungeregeltes Entweichen des Fluids in eine Umgebung vermeiden" soll insbesondere verstanden werden, dass eine Leckrate des Fluids maximal ein Prozent einer in dem Fluidraum aufgenommenen Anfangsmenge pro Stunde beträgt. Unter einer "Reaktionseinheit" soll insbesondere eine Einheit mit einem Fluidraum verstanden werden, die zu einer Durchführung einer chemischen Reaktion vorgesehen ist, beispielsweise einer elektrochemischen Reaktion. Unter einer "Redox-Vorrichtung" soll insbesondere eine Vorrichtung mit zumindest einer Redox-Einheit verstanden werden. Bevorzugt ist die Redox-Vorrichtung als Wasserstoff-Sauerstoff-Redox-Vorrichtung mit zumindest einer Wasserstoff-Sauerstoff-Redox-Einheit ausgebildet. Unter einer "Redox-Einheit" soll eine Einheit mit zumindest zwei Elektroden, wovon vorzugsweise eine als eine Wasserstoffelektrode und eine als eine Sauerstoffelektrode ausgebildet ist, mit einem die zwei Elektroden verbindenden Stromkreis, mit zumindest einem zumindest zwischen den zwei Elektroden angeordneten Elektrolyt und/oder mit einer zumindest zwischen den zwei Elektroden angeordneten elektrolytgefüllten oder ionenleitenden Membran, verstanden werden, wobei mittels der Einheit eine Redox-Reaktion durchgeführt wird, bei der unter Energieabgabe in Form von elektrischer Leistung, die über den Stromkreis abgegeben wird, das erste Gas oxidiert und das zweite Gas reduziert wird und in einer Reaktion zu einem Produktstoff, vorzugsweise Wasser, umgesetzt werden, welches in eine Umgebung oder einen Speichertank abgegeben wird, oder bei der unter Aufwendung von Energie in Form elektrischer Leistung ein Eduktstoff, vorzugsweise Wasser, zu einer Erzeugung von einem ersten Gas, vorzugsweise molekularem Wasserstoff, und einem zweiten Gas, vorzugsweise molekularem Sauerstoff, gespalten wird und das erste Gas und das zweite Gas in die Umgebung oder in Speichertanks abgeführt werden. Die Redox-Einheit ist als ein Elektrolyseur für Wasserstoff und Sauerstoff, bei dem unter Energieaufnahme durch einen elektrischen Strom Wasser in molekularen Sauerstoff und molekularen Wasserstoff gespalten wird, ausgebildet. Unter einer "Redoxreaktion" soll insbesondere eine Reaktion verstanden werden, bei der zumindest zwei chemische Stoffe miteinander reagieren, wobei zumindest ein chemischer Stoff Elektronen abgibt und somit oxidiert und zumindest ein chemischer Stoff Elektronen aufnimmt und somit reduziert wird. Unter "Wasserstoffgas" soll insbesondere Wasserstoff in molekularer Form, der als Gas vorliegt, verstanden werden. Unter "Sauerstoffgas" soll insbesondere Sauerstoff in molekularer Form, der als Gas vorliegt, verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Dichtbereich" soll insbesondere ein Bereich der Fluidraumvorrichtung verstanden werden, der den Fluidraum gegen einen Fluidaustausch mit einem Umgebungsraum abschließt. Insbesondere kann der Dichtbereich ein Dichtelement, beispielsweise einen O-Ring, eine Gummidichtung oder eine Indiumdichtung, aufweisen, welches einen Spalt zwischen zwei Wandelementen der Fluidraumvorrichtung dichtend verschließt. Unter einem "Umgebungsraum" soll insbesondere ein Raum außerhalb der Fluidraumvorrichtung, insbesondere außerhalb der Redox-Vorrichtung, verstanden werden. Insbesondere ist der Umgebungsraum verschieden und getrennt von einem Prozessbereich, in dem eine Durchführung einer chemischen Reaktion, insbesondere einer Redox-Reaktion, vorgesehen ist und/oder Produkte oder Edukte der chemischen Reaktion gelagert werden. Unter einer "Dichtkontur" soll insbesondere eine Formgebung zumindest eines der Wandelemente verstanden werden, die sich von einer Formgebung außerhalb des Dichtbereichs unterscheidet und die eine Dichtwirkung bereitstellt. Insbesondere können mehrere Dichtkonturen aufeinander folgend, insbesondere in einer radialen Richtung der Fluidraumvorrichtung aufeinander folgend, angeordnet sein. Unter einem "Umgebungsbereich des Dichtbereichs" soll insbesondere ein Bereich in einer Nachbarschaft des Dichtbereichs verstanden werden, wobei der Umgebungsbereich sich in dem Prozessbereich und/oder in den Umgebungsbereich erstrecken kann. Insbesondere kann der Dichtbereich zusätzlich zu der Dichtkontur ein weiteres Dichtelement, beispielsweise einen Dichtring und/oder eine Beschichtung auf dem ersten Wandelement und/oder dem zweiten Wandelement aufweisen, das insbesondere in die Dichtkontur eingesetzt sein kann. Insbesondere ist eine Dichtwirkung der Dichtkontur weitgehend unabhängig von einer Schwerewirkung und/oder von einem Außendruck, wodurch die Fluidraumvorrichtung insbesondere für einen Einsatz unter Bedingungen reduzierter Schwerkraft vorteilhaft einsetzbar ist. Unter "Bedingungen reduzierter Schwerkraft" sollen insbesondere Bedingungen verstanden werden, bei denen eine Schwerewirkung von maximal 0,9 g, vorteilhaft maximal 1*10⁻³ g, vorzugsweise maximal 1*10⁻⁶ g und besonders bevorzugt maximal 1*10⁻⁸ g wirksam ist. Die Schwerewirkung kann durch Gravitation und/oder künstlich durch eine Beschleunigung erzeugt sein. Mit "g" ist der Wert der Fallbeschleunigung auf der Erde von 9,81 m/s² bezeichnet. Es kann insbesondere eine Verringerung einer Anzahl an benötigten Dichtelementen des Dichtbereichs erreicht und ein besonders einfacher Aufbau der Fluidraumvorrichtung erreicht werden.

Weiterhin wird vorgeschlagen, dass die zumindest zwei Wandelemente im Dichtbereich einen Abstand von höchstens 0,5 mm aufweisen. Es kann insbesondere ein zu dichtender Querschnitt verringert und eine hohe Dichtwirkung erreicht werden.

Des Weiteren wird vorgeschlagen, dass das zumindest eine erste Wandelement und das zumindest eine zweite Wandelement im Dichtbereich jeweils eine Dichtfläche aufweisen, die in einem montierten Zustand eine gasdichte Dichtwirkung bereitstellt. Unter einer "Dichtfläche" soll insbesondere eine Fläche verstanden werden, die eine Dichtwirkung bereitstellt. Unter einem "montierten Zustand" soll insbesondere ein Zustand verstanden werden, in dem zumindest das zumindest eine erste Wandelement und das zumindest eine zweite Wandelement aneinander montiert sind. Es kann insbesondere eine hohe Dichtwirkung erreicht werden.

Ferner wird vorgeschlagen, dass die zumindest zwei Wandelemente im Bereich der Dichtflächen in direktem Kontakt miteinander sind. Insbesondere wird durch den direkten Kontakt miteinander die gasdichte Dichtwirkung erreicht. Es kann insbesondere auf zusätzliche Dichtelemente zu einem Abschluss des Fluidraums gegenüber einem Fluidaustausch mit der Umgebung verzichtet werden.

Des Weiteren wird vorgeschlagen, dass die Dichtflächen jeweils im Wesentlichen streifenförmig ausgebildet sind. Unter einer "streifenförmig ausgebildeten Dichtfläche" soll insbesondere eine Dichtfläche verstanden werden, die eine Erstreckung in eine Richtung senkrecht zu einer Haupterstreckungsrichtung aufweist, die maximal zehn Prozent, vorteilhaft maximal fünf Prozent und bevorzugt maximal ein Prozent einer Erstreckung in der Haupterstreckungsrichtung beträgt. Insbesondere ist die Haupterstreckungsrichtung der Dichtfläche von einer Radialrichtung der Fluidraumvorrichtung gebildet. Es kann insbesondere eine hohe Dichtwirkung erreicht werden.

Weiterhin wird vorgeschlagen, dass die Dichtflächen eine Breite von weniger als 1 mm, vorteilhaft weniger als 0,5 mm, aufweisen. Unter einer "Breite der Dichtflächen" soll insbesondere eine Erstreckung der Dichtflächen in eine Richtung senkrecht zu der Haupterstreckungsrichtung der Dichtfläche verstanden werden. Es kann insbesondere eine hohe Dichtwirkung erreicht werden.

Ferner wird vorgeschlagen, dass die Fluidraumvorrichtung zumindest ein Verspannteilelement, das eine auf die Dichtflächen wirkende Presskraft für eine druckfeste Dichtwirkung bereitstellt, aufweist. Unter einer "druckfesten Dichtwirkung" soll insbesondere eine Dichtwirkung verstanden werden, bei der bei einer Druckdifferenz zwischen dem Fluidraum und dem Umgebungsraum von 60 bar, vorteilhaft 80 bar und bevorzugt 100 bar ein Druckverlust und/oder Druckanstieg von maximal 0,01 bar pro Stunde auftritt. Beispielsweise kann das Verspannteilelement als ein die Fluidraumvorrichtung umgebender, durch Verschraubung einen Druck auf die Fluidraumvorrichtung ausübender Rahmen ausgebildet sein. Vorzugsweise weist ein Material des ersten Wandelements und des zweiten Wandelements eine ausreichende Elastizität auf, so dass durch die Presskraft eine reversible elastische Verformung erreicht wird. Es kann insbesondere eine hohe Dichtwirkung erreicht werden.

Des Weiteren wird vorgeschlagen, dass die Fluidraumvorrichtung zumindest ein zwischen dem zumindest ersten Wandelement und dem zumindest zweiten Wandelement angeordnetes Distanzelement aufweist, das dazu vorgesehen ist, die auf die Kontaktflächen wirkende Presskraft zu begrenzen. Unter einem "Distanzelement" soll insbesondere ein Element mit einer Materialelastizität verstanden werden, die wesentlich niedriger, insbesondere zumindest um fünf Prozent niedriger, vorteilhaft zumindest um zehn Prozent und bevorzugt zumindest um zwanzig Prozent niedriger ist als eine niedrigste Materialelastizität des ersten Wandelements und/oder des zweiten Wandelements. Insbesondere ist das Distanzelement dazu vorgesehen, die Presskraft zu begrenzen, um eine plastische Verformung des ersten Wandelements und/oder des zweiten Wandelements durch die Presskraft zu vermeiden. Insbesondere kann der Dichtbereich somit im Bedarfsfall reversibel geöffnet werden.

Weiterhin wird vorgeschlagen, dass die zumindest eine Dichtkontur als eine Aufwölbung des zumindest einen Wandelements ausgebildet ist, die einen Kamm aufweist, auf dem die Dichtfläche des zumindest einen anderen Wandelements angeordnet ist. Unter einer "Aufwölbung" soll insbesondere eine Erhebung des Wandelements im Bereich eines Streifens verstanden werden, vorzugsweise durch eine zumindest einseitige Vergrößerung der Dicke des Wandelements und/oder durch eine wellenförmige Formgebung entlang einer Breite des Streifens. Insbesondere kann die Aufwölbung als eine massive Kontur ausgebildet sein, bei der eine Dicke des Wandelements sich verändert und/oder als eine Kontur mit einer konstanten Dicke, bei der sich ein Verlauf des Wandelements verändert. Es kann insbesondere eine konstruktionstechnisch einfach herstellbare Dichtkontur erreicht werden.

Ferner wird vorgeschlagen, dass die Wandelemente aus zumindest im Wesentlichen verschiedenen Materialien ausgebildet sind. Unter "zumindest im Wesentlichen verschiedenen Materialien" soll insbesondere verstanden werden, dass sich Materialien des ersten Wandelements und des zweiten Wandelements zumindest hinsichtlich zumindest eines Materialkennwerts, wie beispielsweise einer Härte, eines spezifischen Gewichts oder einer elektrischen Leitfähigkeit unterscheiden und vorteilhaft zumindest teilweise aus unterschiedlichen Atomsorten oder Molekülsorten bestehen. Bevorzugt gehören Materialien des ersten Wandelements und des zweiten Wandelements unterschiedlichen Materialklassen an, beispielsweise kann das erste Wandelement aus einem Kunststoff bestehen und das zweite Wandelement aus einem metallischen Werkstoff. Insbesondere kann das erste Wandelement zumindest teilweise aus einem Polyetheretherketon und/oder einem Polysulfon bestehen, wobei in eine Matrix aus Polyetheretherketon und/oder einem Polysulfon weitere Stoffe eingebracht sein können. Das zweite Wandelement besteht zumindest teilweise aus einem elektrisch leitenden Material mit einer hohen Streckgrenze, vorzugsweise aus einem metallischen Material, wie beispielsweise aus einem nickelhaltigen Blech. Es kann insbesondere eine gezielte Abstimmung von Eigenschaften der Wandelemente auf Anforderungen der jeweiligen Reaktionseinheit erreicht werden.

Des Weiteren wird vorgeschlagen, dass eine Haupterstreckung der Wandelemente mindestens das 30-fache einer Höhe des Fluidraums beträgt. Unter einer "Höhe des Fluidraums" soll insbesondere ein mittlerer Abstand des zumindest einen ersten Wandelements und des zumindest einen zweiten Wandelements verstanden werden, den das zumindest eine erste Wandelement und das zumindest eine zweite Wandelement in einem Bereich eines geometrischen Zentrums des Fluidraums und im einem um das geometrische Zentrum des Fluidraums zentrierten Bereich, welcher zumindest neunzig Prozent eines Volumens des Fluidraums einschließt, aufweist. Bevorzugt ist der Fluidraum so ausgebildet, dass er bis auf Randbereiche eine konstante Höhe aufweist. Es kann insbesondere eine kompakte Fluidraumvorrichtung erreicht werden.

Ferner wird vorgeschlagen, dass zumindest eines der Wandelemente einen fluiddurchlässigen Teilbereich aufweist. Unter einem "fluiddurchlässigen Teilbereich" soll insbesondere ein Bereich verstanden werden, durch den ein Fluid durchtreten kann, beispielsweise durch Diffusion durch ein Gitter von Atomen und/oder Molekülen eines Materials des fluiddurchlässigen Teilbereichs oder durch speziell dazu vorgesehen Öffnungen und/oder Poren des fluiddurchlässigen Bereichs. Bevorzugt ist der fluiddurchlässige Teilbereich einstückig mit einer Elektrode der Redox-Vorrichtung ausgebildet. Insbesondere wird somit eine fluiddurchlässige Verbindung von dem Fluidraum zu einem Funktionselement der Redox-Vorrichtung, wie beispielsweise einer Membran, und/oder einem weiteren Fluidraum erreicht. Es kann insbesondere ein Verzicht auf zusätzliche, fluiddurchlässige Wandelemente erreicht werden.

Weiterhin wird eine Redox-Vorrichtung mit zumindest einer ersten erfindungsgemäßen Fluidraumvorrichtung und zumindest einer zweiten erfindungsgemäßen Fluidraumvorrichtung vorgeschlagen. Insbesondere bilden die zumindest eine erste erfindungsgemäße Fluidraumvorrichtung und die zumindest eine zweite erfindungsgemäße Fluidraumvorrichtung jeweils eine Halbzelle eines Reaktionsbereichs der Redox-Vorrichtung.

Des Weiteren wird vorgeschlagen, dass die Fluidraumvorrichtungen in einer Richtung senkrecht zu einer Haupterstreckung direkt benachbart angeordnet sind. Insbesondere können mehrere Redox-Vorrichtungen direkt benachbart angeordnet sein, wobei insbesondere Fluidraumvorrichtungen direkt benachbarter Redox-Vorrichtungen beispielsweise in Form eines sogenannten Stacks angeordnet sind. Es kann insbesondere eine platzsparende Anordnung mehrerer Fluidraumvorrichtung erreicht werden.

Ferner wird vorgeschlagen, dass die Fluidraumvorrichtungen in einer Richtung senkrecht zu einer Haupterstreckung spiegelbildlich zueinander angeordnet sind. Insbesondere grenzen zumindest ein erstes Wandelement oder zumindest ein zweites Wandelement der zumindest einen ersten Fluidraumvorrichtung und zumindest ein erstes Wandelement oder zumindest ein zweites Wandelement der zumindest einen zweiten Fluidraumvorrichtung aneinander und sind im Wesentlichen gleich ausgebildet. Unter "im Wesentlichen gleich ausgebildet" soll insbesondere aus dem gleichen Material bestehend verstanden werden. Es kann insbesondere eine konstruktionstechnisch einfach herzustellende direkt benachbarte Anordnung erreicht werden.

Die erfindungsgemäße Fluidraumvorrichtung soll hierbei nicht auf die oben beschriebene Anwendung und Ausführungsform beschränkt sein. Insbesondere kann die erfindungsgemäße Fluidraumvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schnitt in radialer Richtung durch einen Randbereich einer Redox-Vorrichtung mit zwei erfindungsgemäßen Fluidraumvorrichtungen,
- Fig. 2: einen Schnitt in radialer Richtung durch eine der Fluidraumvorrichtungen der Redox-Vorrichtung und
- Fig. 3: einen Schnitt in radialer Richtung durch eine Fluidraumvorrichtung einer Redox-Vorrichtung eines weiteren Ausführungsbeispiels.

### Beschreibung der Ausführungsbeispiele

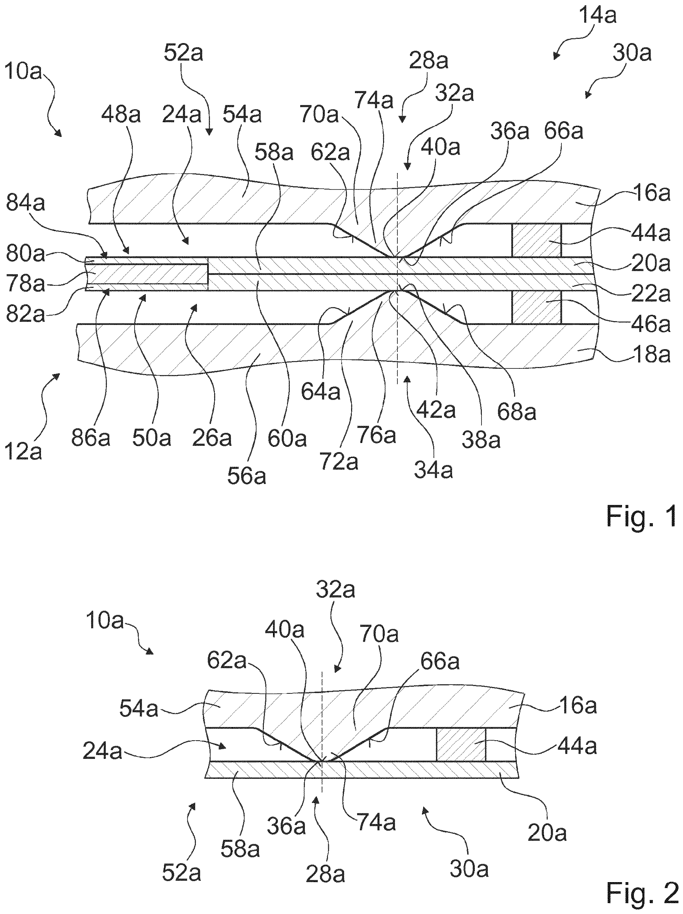

Figur 1 zeigt einen Ausschnitt einer Redox-Vorrichtung 14a mit einer ersten und einer zweiten Fluidraumvorrichtung 10a, 12a. Dargestellt ist ein Schnitt in radialer Richtung in einem Randbereich der Redox-Vorrichtung. Die Fluidraumvorrichtungen 10a, 12a sind analog zueinander ausgebildet, weswegen im Folgenden nur die erste Fluidraumvorrichtung 10a näher beschrieben wird. Dabei verweisen die Bezugszeichen jeweils auf die entsprechenden Elemente sowohl der ersten Fluidraumvorrichtung 10a als auch der zweiten Fluidraumvorrichtung 12a. Die Fluidraumvorrichtung 10a, 12a umfasst ein erstes Wandelement 16a, 18a und ein zweites Wandelement 20a, 22a. Die Wandelemente 16a, 18a, 20a, 22a begrenzen einen Fluidraum 24a, 26a und weisen einen Dichtbereich 28a auf, der den Fluidraum 24a, 26a gegen einen Gasaustausch gegenüber einem Umgebungsraum 30a abschließt. Die Redox-Vorrichtung 14a ist als ein Elektrolyseur für eine Spaltung von Wasser in Wasserstoff und Sauerstoff ausgebildet. Die Fluidraumvorrichtung 10a, 12a ist als eine Halbzelle des Elektrolyseurs ausgebildet (vgl. Figur 2). Die Redox-Vorrichtung 14a weist einen Prozessbereich 52a auf, der den Fluidraum 24a, 26a der Fluidraumvorrichtung 10a, 12a umfasst.

Das erste Wandelement 16a, 18a und das zweite Wandelement 20a, 22a bestehen aus im Wesentlichen unterschiedlichen Materialien. Das erste Wandelement 16a, 18a besteht aus einem elektrisch isolierenden Material. Das erste Wandelement 16a, 18a besteht aus einem Thermoplast. Das erste Wandelement 16a, 18a besteht aus einem Polysulfon. Das erste Wandelement 16a, 18a umfasst einen scheibenförmigen Grundkörper 54a, 56a. Der Grundkörper 54a, 56a weist einen Durchmesser von 70 mm und eine Dicke von 18 mm auf. Der Durchmesser des Grundkörpers 54a, 56a entspricht einer Haupterstreckung des ersten Wandelements 16a, 18a. Das zweite Wandelement 20a, 22a besteht aus einem metallischen, elektrisch leitenden Material, das eine hohe Streckgrenze aufweist. Das zweite Wandelement 20a, 22a besteht aus einem nickelhaltigen Blech. Das zweite Wandelement 20a, 22a umfasst einen scheibenförmigen Grundkörper 58a, 60a. Der Grundkörper 54a, 56a weist einen Durchmesser von 70 mm und eine Dicke von 5 mm auf. Der Durchmesser entspricht einer Haupterstreckung des zweiten Wandelements 20a, 22a. Der Durchmesser des Grundkörpers 58a, 60a des zweiten Wandelements 20a, 22a entspricht dem Durchmesser des Grundkörpers 54a, 56a des ersten Wandelements 16a, 18a. Das erste Wandelement 16a, 18a und das zweite Wandelement 20a, 22a weisen eine gemeinsame Achse auf. Das erste Wandelement 16a, 18a und das zweite Wandelement 20a, 22a sind parallel zueinander und koaxial angeordnet. In axialer Richtung ist zwischen den Wandelementen 16a, 18a, 20a, 22a der Fluidraum 24a, 26a angeordnet, der dazu vorgesehen ist, ein Prozessgas aufzunehmen. Der Fluidraum 24a, 26a weist eine Höhe von 1 mm auf. In den Fluidräumen 24a, 26a ist jeweils ein Prozessgas aufgenommen, wobei in den Fluidräumen 24a, 26a ein Druck von 100 bar herrscht.

Das erste Wandelement 16a, 18a weist in dem Dichtbereich 28a eine Dichtkontur 32a, 34a auf, die dazu vorgesehen ist, eine Dichtwirkung bereitzustellen und durch die sich ein Abstand zwischen den Wandelementen 16a, 18a, 20a, 22a im Dichtbereich 28a gegenüber einem Umgebungsraum 30a des Dichtbereichs 28a verringert. Das erste Wandelement 16a, 18a weist eine Oberfläche auf, die dem zweiten Wandelement 20a, 22a zugewandt ist. Die Dichtkontur 32a, 34a ist als eine Aufwölbung auf der dem zweiten Wandelement 20a, 22a zugewandten Oberfläche ausgebildet. Das zweite Wandelement 20a, 22a weist in dem Dichtbereich 28 eine ebene, glatte Oberfläche auf. Die Aufwölbung weist die Form einer ringförmigen massiven Schwelle auf. Die Dichtkontur 32a, 34a ist konzentrisch zu einem Rand des ersten Wandelements 16a, 18a, und einem Rand des zweiten Wandelements 20a, 22a angeordnet. Die Dichtkontur 32a, 34a ist einstückig mit dem Grundkörper 54a, 56a ausgebildet und weist einen in radialer Richtung angeordneten trapezförmigen Querschnitt auf. Die Dichtkontur 32a, 34a weist eine Höhe von 1 mm mit einer Formtoleranz von 0,05 mm auf. Das erste Wandelement 16a, 18a und das zweite Wandelement 20a, 22a weisen im Dichtbereich 28a jeweils eine Dichtfläche 36a, 38a, 40a, 42a auf, die eine gasdichte Dichtwirkung bereitstellt.

Die Dichtkontur 32a, 34a weist eine auf das zweite Wandelement 20a, 22a zuführende Flanke 62a, 64a und eine von dem zweiten Wandelement 20a, 22a wegführende Flanke 66a, 68a auf. Die Flanken 62a, 64a, 66a, 68a sind in einer radialen Richtung spiegelbildlich zueinander angeordnet. Die Flanken 62a, 64a, 66a, 68a weisen jeweils eine Neigung von 30 Grad gegenüber der Oberfläche des ersten Wandelements 16a, 18a auf. Die Dichtkontur 32a, 34a weist an der Oberfläche des ersten Wandelements 16a, 18a eine Basis 70a, 72a mit einer Breite von 4,5 mm auf. Die Dichtkontur 32a, 34a weist in einem Bereich zwischen Enden der Flanken 62a, 64a, 66a, 68a einen Kamm 74a, 76a auf. Der Kamm 74a, 76a weist einen Abstand von 24 mm von der Achse des Grundkörpers 54a, 56a, 58a, 60a auf. Der zweifache Abstand des Kamms 74a, 76a von der Achse des Grundkörpers 54a, 56a entspricht einer Haupterstreckung des Fluidraums 24a, 26a. Eine Haupterstreckung des Fluidraums 24a, 26a beträgt das 48-fache der Höhe des Fluidraums 24a, 26a. Der Kamm 74a, 76a weist einen Abstand von 11 mm von dem Rand des ersten Wandelements 16a, 18a auf. Der Abstand des Kamms 74a, 76a von der Achse entspricht einem Radius der Dichtkontur 32a, 34a. Das erste Wandelement 16a, 18a weist im Bereich der Dichtkontur 32a, 34a eine vergrößerte Dicke und im Bereich des Kamms 74a, 76a eine maximale Dicke auf. Auf dem Kamm 74a, 76a ist die Dichtfläche 40a, 42a des zweiten Wandelements 20a, 22a angeordnet ist. Das erste Wandelement 16a, 18a und das zweite Wandelement 20a, 22a sind im Bereich der Dichtflächen 36a, 38a, 40a, 42a in direktem Kontakt miteinander. Die Dichtflächen 36a, 38a, 40a, 42a sind streifenförmig ausgebildet und weisen eine Breite von 0,5 mm auf.

Die Fluidraumvorrichtung 10a, 12a weist ein Verspannteilelement auf, das eine auf die Dichtflächen 36a, 38a, 40a, 42a wirkende Presskraft für eine druckfeste Dichtwirkung bereitstellt. Die Presskraft verformt die Dichtkontur 32a, 34a elastisch und reduziert die Höhe der Dichtkontur 32a, 34a um etwa 0,1 mm, wodurch eine Dichtwirkung im Bereich der Dichtflächen 36a, 38a erzielt wird. Die Dichtkontur 32a, 34a stellt eine Rückstellkraft bereit, die der Presskraft auf die Dichtflächen 36a, 38a entspricht. Die Fluidraumvorrichtung 10a, 12a umfasst ein zwischen dem ersten Wandelement 16a, 18a und dem zweiten Wandelement 20a, 22a angeordnetes Distanzelement 44a, 46a, das dazu vorgesehen ist, eine Presskraft auf die Dichtflächen 36a, 38a, 40a, 42a und die Dichtkontur 32a, 34a zu begrenzen, wodurch eine Verformung der Dichtkontur 32a, 34a in einem elastischen Bereich liegt und eine dauerhafte plastische Verformung der Dichtkontur 32a, 34a vermieden wird. Das Distanzelement 44a, 46a ist in Form eines Rings ausgebildet und weist einen rechteckigen Querschnitt auf. Das Distanzelement 44a, 46a ist in radialer Richtung außerhalb der Dichtkontur 32a, 34a angeordnet. Das Distanzelement 44a, 46a ist außerhalb des Fluidraums 24a, 26a im Umgebungsraum 30a angeordnet. Grundsätzlich ist es denkbar, dass das Distanzelement 44a, 46a einen Querschnitt in einer anderen geeigneten Form und die Fluidraumvorrichtung 10a, 12a eine Mehrzahl von Distanzelementen 44a, 46a aufweist.

Das erste Wandelement 16a, 18a weist nicht dargestellte Kanäle zu einem Transport von Prozessstoffen auf. Die Kanäle umfassen radial ausgerichtete Röhren und axial verlaufende Bohrungen, die den Fluidraum 24a, 26a mit einer nicht dargestellten Ableitung verbinden. Das zweite Wandelement 20a, 22a ist dazu vorgesehen, den Prozessbereich 52a mit einer nicht dargestellten elektrischen Spannungsquelle zu verbinden und einen elektrischen Strom in den Prozessbereich 52a zu leiten. Das zweite Wandelement 20a, 22a ist ferner dazu vorgesehen, eine Prozesswärme aus dem Prozessbereich 52a abzuleiten. Das zweite Wandelement 20a, 22a weist nicht näher dargestellte Kanäle auf, die zu einem Kühlmitteltransport vorgesehen sind.

Die erste Fluidraumvorrichtung 10a und die zweite Fluidraumvorrichtung 12a bilden zusammen eine Zelle des Elektrolyseurs aus (vgl. Figur 1). Die Zelle umfasst eine Membran 78a, die in axialer Richtung zwischen der ersten Fluidraumvorrichtung 10a und der zweiten Fluidraumvorrichtung 12a angeordnet ist. Die erste Fluidraumvorrichtung 10a und die zweite Fluidraumvorrichtung 12a sind in axialer Richtung spiegelbildlich zueinander angeordnet. In axialer Richtung sind das erste Wandelement 16a, der Fluidraum 24a und das zweite Wandelement 20a der ersten Fluidraumvorrichtung 10a, die Membran 78a, das zweite Wandelement 22a der zweiten Fluidraumvorrichtung 12a, der Fluidraum 26a und das erste Wandelement 18a der zweiten Fluidraumvorrichtung 12a benachbart zueinander angeordnet. Die Dichtkontur 32a der ersten Fluidraumvorrichtung 10a und die Dichtkontur 34a der zweiten Fluidraumvorrichtung 12a sind in einem montierten Zustand einander zugewandt. Das zweite Wandelement 20a der ersten Fluidraumvorrichtung 10a und das zweite Wandelement 22a der zweiten Fluidraumvorrichtung 12a sind in einem Betriebszustand der Zelle mit unterschiedlichen Polen einer nicht näher dargestellten elektrischen Spannungsquelle verbunden. Das zweite Wandelement 20a der ersten Fluidraumvorrichtung 10a ist mit einem negativen Pol und das zweite Wandelement 22a der zweiten Fluidraumvorrichtung 12a ist mit einem positiven Pol der Spannungsquelle verbunden.

In der Zelle des Elektrolyseurs sind die Membran 78a, welche mit einem Elektrolyten gefüllt ist, sowie zwei Elektroden 80a, 82a angeordnet. Als Elektrolyt wird eine Kaliumhydroxidlösung verwendet. Die Membran 78a ist zwischen dem zweiten Wandelement 20a der ersten Fluidraumvorrichtung 10a und dem zweiten Wandelement 22a der zweiten Fluidraumvorrichtung 12a angeordnet. Die Elektroden 80a, 82a sind jeweils als ein poröser Teilbereich 48a, 50a des zweiten Wandelements 20a der ersten Fluidraumvorrichtung 10a und des zweiten Wandelements 22a der zweiten Fluidraumvorrichtung 12a ausgebildet, die an die Membran 78a angrenzen. In einem Betrieb wird der Membran 78a Wasser zu einer elektrolytischen Spaltung gemäß einer bekannten Elektrolysereaktion zugeführt. In Elektrolysebereichen 84a, 86a, die von Kontaktbereichen der Membran 78a und jeweils einer Elektrode 80a, 82a gebildet sind, entstehen Wasserstoff und Sauerstoff in Gasform als Produkte der elektrolytischen Spaltung. Wasserstoff und Sauerstoff entstehen in unterschiedlichen Elektrolysebereichen 84a, 86a, die unterschiedlichen Fluidräumen 24a, 26a zugeordnet sind, und diffundieren durch die Elektrode 80a, 82a in den jeweiligen Fluidraum 24a, 26a. Aus den Fluidräumen 24a, 26a werden sie mittels nicht dargestellter Ableitungen in Gasspeicher geleitet.

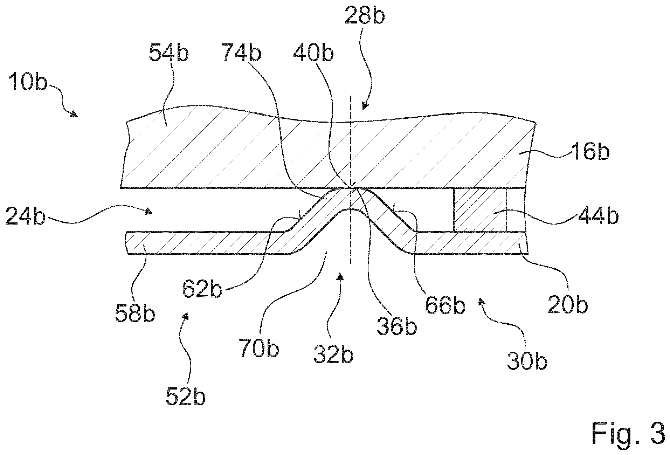

In der Figur 3 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispiel der Figur 3 ist der Buchstabe a durch den Buchstaben b ersetzt.

Figur 3 zeigt eine Fluidraumvorrichtung 10b einer Redox-Vorrichtung. Die Fluidraumvorrichtung 10b umfasst ein erstes Wandelement 16b und ein zweites Wandelement 20b. Die Wandelemente 16b, 20b begrenzen einen Fluidraum 24b und weisen einen Dichtbereich 28b auf, der den Fluidraum 24b gegen einen Gasaustausch gegenüber einem Umgebungsraum 30b abschließt. Die Redox-Vorrichtung 1 ist als ein Elektrolyseur ausgebildet. Die Fluidraumvorrichtung 10b ist als eine Halbzelle des Elektrolyseurs ausgebildet.

Im Unterschied zu dem vorherigen Ausführungsbeispiel weist anstelle des ersten Wandelements 16b, das zweite Wandelement 20b in dem Dichtbereich 28b eine Dichtkontur 32b auf, die dazu vorgesehen ist, eine Dichtwirkung bereitzustellen und durch die sich ein Abstand zwischen den Wandelementen 16b, 20b im Dichtbereich 28b gegenüber einem Umgebungsraum 30b des Dichtbereichs 28b verringert. Das erste Wandelement 16b weist in dem Dichtbereich 28b eine glatte, ebene Oberfläche auf. Das zweite Wandelement 20b weist eine Oberfläche auf, die dem ersten Wandelement 16b zugewandt ist. Die Dichtkontur 32b ist als eine Aufwölbung an der dem ersten Wandelement 16b zugewandten Oberfläche ausgebildet. Die Aufwölbung weist die Form einer Welle auf. Die Dichtkontur 32b ist konzentrisch zu einem Rand des ersten Wandelements 16b und einem Rand des zweiten Wandelements 20b angeordnet. Die Dichtkontur 32b ist einstückig mit dem Grundkörper 54b ausgebildet und weist einen in radialer Richtung angeordneten haubenförmigen Querschnitt auf. Die Dichtkontur 32b weist eine Höhe von 1 mm mit einer Formtoleranz von 0,05 mm auf. Die Aufwölbung bildet auf einer dem ersten Wandelement 16b abgewandten Seite eine Rille aus.

Das erste Wandelement 16b und das zweite Wandelement 20b weisen im Dichtbereich 28b eine Dichtfläche 36b, 40b auf, die eine gasdichte Dichtwirkung bereitstellt. Die Dichtkontur 32b weist eine auf das erste Wandelement 16b zuführende Flanke 62b und eine vom ersten Wandelement 16b wegführende Flanke 66b auf. Die Flanken 62b, 66b sind in einer radialen Richtung spiegelbildlich zueinander angeordnet. Die Flanken 62b, 66b weisen jeweils eine Neigung von 45 Grad gegenüber der Oberfläche des zweiten Wandelements 20b auf. Die Dichtkontur 32b weist an der Oberfläche des zweiten Wandelement 20b eine Basis 70b mit einer Breite von 3 mm auf. Die Dichtkontur 32b weist in einem Bereich zwischen Enden der Flanken 62b, 66b einen Kamm 74b auf. Der Kamm 74b weist einen Abstand von 24 mm von der Achse des Grundkörpers 54b auf. Der Kamm 74b weist einen Abstand von 11 mm von dem Rand des zweiten Wandelements 20b auf. Der Abstand des Kamms 74b von der Achse entspricht einem Radius der Dichtkontur 32b. Das zweite Wandelement 20b weist im Bereich der Dichtkontur 32b eine im Wesentlichen gleichbleibende Dicke im Vergleich zu einer Umgebung der Dichtkontur 32b. Auf dem Kamm 74b sind die Dichtfläche 40b des zweiten Wandelements 20b und die Dichtfläche 36b des ersten Wandelements 16b angeordnet. Das erste Wandelement 16b und das zweite Wandelement 20b sind im Bereich der Dichtflächen 36b, 40b in direktem Kontakt miteinander. Die Dichtflächen 36b, 40b sind streifenförmig ausgebildet und weisen eine Breite von 0,5 mm auf.

## Patentansprüche

1. Fluidraumvorrichtung für eine Reaktionseinheit einer als ein Elektrolyseur für Wasserstoff und Sauerstoff, bei dem unter Energieaufnahme durch einen elektrischen Strom Wasser in molekularen Sauerstoff und molekularen Wasserstoff gespalten wird, ausgebildeten Redox-Vorrichtung, mit zumindest einem ersten Wandelement (16a, 18a; 16b) und zumindest einem zweiten Wandelement (20a, 22a; 22b), die zumindest teilweise einen Fluidraum (24a, 26a; 24b) begrenzen, und mit einem Dichtbereich (28a; 28b), der den Fluidraum (24a, 26a; 24b) gegen einen Fluidaustausch, insbesondere einen Gasaustausch, gegenüber einem Umgebungsraum (30a; 30b) abschließt, wobei zumindest eines der Wandelemente (16a, 18a, 20a, 22a; 16b, 20b) in einem montierten Zustand in dem Dichtbereich (28a; 28b) zumindest eine Dichtkontur (32a, 34a; 32b) aufweist, die dazu vorgesehen ist, eine Dichtwirkung bereitzustellen und durch die sich ein Abstand der zumindest zwei Wandelemente (16a, 18a, 20a, 22a; 16b, 20b) im Dichtbereich (28a; 28b) gegenüber einem Umgebungsbereich des Dichtbereichs (28a; 28b) verringert, wobei das zumindest erste Wandelement (16a, 18a; 16b) und das zumindest zweite Wandelement (20a, 22a; 20b) in dem Dichtbereich (28a; 28b) jeweils eine Dichtfläche (36a, 38a, 40a, 42a; 36b, 40b) aufweisen, die in einem montierten Zustand eine gasdichte Dichtwirkung bereitstellt, wobei die zumindest zwei Wandelemente (16a, 18a, 20a, 22a; 16b, 20b) im Bereich der Dichtfläche (36a, 38a, 40a, 42a; 36b, 40b) in direktem Kontakt miteinander sind, **dadurch gekennzeichnet, dass**
das erste Wandelement (16a, 18a) einen scheibenförmigen Grundkörper (54a, 56a) umfasst, wobei die Dichtkontur (32a, 34a) einstückig mit dem Grundkörper (54a, 56a) ausgebildet ist und einen in radialer Richtung angeordneten trapezförmigen Querschnitt aufweist und
das erste Wandelement (16a, 18a) aus einem elektrisch isolierenden Material besteht und dass das zweite Wandelement (20a, 22a) zumindest teilweise aus einem elektrisch leitenden Material mit einer hohen Streckgrenze besteht.

2. Fluidraumvorrichtung nach Anspruch 1,
**dadurch gekennzeichnet, dass**
die zumindest zwei Wandelemente (16a, 18a, 20a, 22a; 16b, 20b) im Dichtbereich (28a; 28b) einen Abstand von höchstens 0,5 mm aufweisen.

3. Fluidraumvorrichtung zumindest nach Anspruch 1 oder 2,
**dadurch gekennzeichnet, dass**
die Dichtflächen (36a, 38a, 40a, 42a; 36b, 40b) jeweils im Wesentlichen streifenförmig ausgebildet sind.

4. Fluidraumvorrichtung nach Anspruch 3,
**dadurch gekennzeichnet, dass**
die Dichtflächen (36a, 38a, 40a, 42a; 36b, 40b) eine Breite von maximal 1 mm aufweisen.

5. Fluidraumvorrichtung zumindest nach Anspruch 1 oder 2,
**gekennzeichnet durch**
zumindest ein Verspannteilelement, das eine auf die Dichtflächen (36a, 38a, 40a, 42a; 36b, 40b) wirkende Presskraft für eine druckfeste Dichtwirkung bereitstellt.

6. Fluidraumvorrichtung nach Anspruch 5,
**gekennzeichnet durch**
zumindest ein zwischen dem zumindest ersten Wandelement (16a, 18a; 16b) und dem zumindest zweiten Wandelement (20a, 22a; 20b) angeordnetes Distanzelement (44a, 46a; 44b), das dazu vorgesehen ist, die auf die Dichtflächen (36a, 38a, 40a, 42a; 36b, 40b) wirkende Presskraft zu begrenzen.

7. Fluidraumvorrichtung zumindest nach Anspruch 1 oder 2,
**dadurch gekennzeichnet, dass**
die zumindest eine Dichtkontur (32a, 34a; 32b) als eine Aufwölbung des zumindest einen Wandelements (16a, 18a; 20b) ausgebildet ist, die einen Kamm (74a, 76a; 74b) aufweist, auf dem die Dichtfläche (40a, 42a; 36b) des zumindest einen anderen Wandelements (20a, 22a; 16b) angeordnet ist.

8. Fluidraumvorrichtung nach einem der vorhergehenden Ansprüche,
**dadurch gekennzeichnet, dass**
eine Haupterstreckung der Wandelemente (16a, 18a, 20a, 22a; 16b, 20b) mindestens das 30-fache einer Höhe des Fluidraums (24a, 26a; 24b) beträgt.

9. Fluidraumvorrichtung nach einem der vorhergehenden Ansprüche,
**dadurch gekennzeichnet, dass**
zumindest eines der Wandelemente (16a, 18a, 20a, 22a; 16b, 20b) einen fluiddurchlässigen Teilbereich (48a, 50a) aufweist.

10. Redox-Vorrichtung mit zumindest einer ersten Fluidraumvorrichtung (10a;10b) und zumindest einer zweiten Fluidraumvorrichtung (12a), jeweils nach einem der vorhergehenden Ansprüche.

11. Redox-Vorrichtung nach Anspruch 10,
**dadurch gekennzeichnet, dass**
die Fluidraumvorrichtungen (10a, 12a; 12b) in einer Richtung senkrecht zu einer Haupterstreckung direkt benachbart angeordnet sind.

12. Redox-Vorrichtung nach Anspruch 10,
**dadurch gekennzeichnet, dass**
die Fluidraumvorrichtungen (10a, 12a; 12b) in einer Richtung senkrecht zu einer Haupterstreckung spiegelbildlich zueinander angeordnet sind.

## Claims

1. Fluid chamber device for a reaction unit of a redox apparatus that is embodied as an electrolyser for hydrogen and oxygen in which water is dissociated into molecular oxygen and molecular hydrogen under energy consumption by way of an electric current, with at least one first wall element (16a, 18a; 16b) and at least one second wall element (20a, 22a; 22b) at least partially delimiting a fluid chamber (24a, 26a; 24b), and with a sealing region (28a; 28b) closing the fluid chamber (24a, 26a; 24b) off against a fluid exchange, in particular a gas exchange, with respect to a surrounding space (30a; 30b),
wherein, in an installed state, at least one of the wall elements (16a, 18a, 20a, 22a; 16b, 20b) comprises at least one sealing contour (32a, 34a; 32b) in the sealing region (28a; 28b), which is configured to provide a sealing effect and by which a spacing of the at least two wall elements (16a, 18a, 20a, 22a; 16b, 20b) in the sealing region (28a; 28b) is reduced relative to a surrounding region of the sealing region (28a; 28b),
wherein the at least one first wall element (16a, 18a; 16b) and the at least one second wall element (20a, 22a; 20b) each comprise a sealing surface (36a, 38a, 40a, 42a; 36b, 40b) in the sealing region (28a; 28b), which provides a gas-tight sealing effect in an installed state,
wherein the at least two wall elements (16a, 18a, 20a, 22a; 16b, 20b) are in direct contact with one another in a proximity of the sealing surface (36a, 38a, 40a, 42a; 36b, 40b),
**characterised in that** the first wall element (16a, 18a) comprises a disk-shaped base body (54a, 56a), the sealing contour (32a, 34a) being realized integrally with the base body (54a, 56a) and having a trapezoid-shaped cross section that is arranged in a radial direction and the first wall element (16a, 18a) being made of an electrically insulating material and the second wall element (20a, 22a) being made at least partially of an electrically conductive material with a high yield point.

2. Fluid chamber device according to claim 1,
**characterised in that** the at least two wall elements (16a, 18a, 20a, 22a; 16b, 20b) have a spacing of maximally 0.5 mm in the sealing region (28a; 28b).

3. Fluid chamber device at least according to claim 1 or 2,
**characterised in that** the sealing surfaces (36a, 38a, 40a, 42a; 36b, 40b) are each embodied to be at least substantially strip-shaped.

4. Fluid chamber device at least according to claim 3,
**characterised in that** the sealing surfaces (36a, 38a, 40a, 42a; 36b, 40b) have a width of maximally 1 mm.

5. Fluid chamber device at least according to one of claims 1 or 2,
**characterised by** at least one tensioning part element providing a pressure force acting on the sealing surfaces (36a, 38a, 40a, 42a; 36b, 40b) for a pressure-resistant sealing effect.

6. Fluid chamber device at least according to claim 5,
**characterised by** at least one spacer element (44a, 46a; 44b) which is arranged between the at least one first wall element (16a, 18a; 16b) and the at least one second wall element (20a, 22a; 20b) and which is configured to delimit the pressure force acting on the sealing surfaces (36a, 38a, 40a, 42a; 36b, 40b).

7. Fluid chamber device at least according to claim 1 or 2,
**characterised in that** the at least one sealing contour (32a, 34a; 32b) is implemented as a bulge of the at least one wall element (16a, 18a; 20b) comprising a crest (74a, 76a; 74b) which the sealing surface (40a, 42a; 36b) of the at least one other wall element (20a, 22a; 16b) is arranged on.

8. Fluid chamber device according to one of the preceding claims,
**characterised in that** a main extension of the wall elements (16a, 18a, 20a, 22a; 16b, 20b) is at least 30 times a height of the fluid chamber (24a, 26a; 24b).

9. Fluid chamber device according to one of the preceding claims,
**characterised in that** at least one of the wall elements (16a, 18a, 20a, 22a; 16b, 20b) has a fluid-permeable partial region.

10. Redox apparatus with at least one first fluid chamber device (10a; 10b) and at least one second fluid chamber device (12a), each according to one of the preceding claims.

11. Redox apparatus according to claim 10,
**characterised in that** the fluid chamber devices (10a, 12a; 12b) are arranged directly adjacent in a direction that is perpendicular to a main extension direction.

12. Redox apparatus according to claim 10,
**characterised in that** the fluid chamber devices (10a, 12a; 12b) are arranged mirror-symmetrically to one another in a direction that is perpendicular to a main extension direction.

## Revendications

1. Dispositif à espace de fluide pour une unité de réaction d'un appareil redox qui est réalisé comme électrolyseur pour d'hydrogène et d'oxygène, dans lequel de l'eau est décomposée en oxygène moléculaire et hydrogène moléculaire, avec au moins un premier élément de paroi (16a, 18a ; 16b) et au moins un deuxième élément de paroi (20a, 22a ; 22b) qui délimitent au moins partiellement un espace de fluide (24a, 26a ; 24b), et avec une zone d'étanchéité (28a ; 28b) fermant l'espace de fluide (24a, 26a; 24b) contre un échange de fluide, notamment un échange de gaz, par rapport à un espace environnant (30a ; 30b),
où au moins un des éléments de paroi (16a, 18a, 20a, 22a ; 16b, 20b) comporte, en état monté, dans la zone d'étanchéité (28a ; 28b) au moins un contour scellant (32a, 34a ; 32b), qui est configuré à fournir un effet d'étanchéité et par le biais duquel un écart des au moins deux éléments de paroi (16a, 18a, 20a, 22a ; 16b, 20b) dans la zone d'étanchéité (28a ; 28b) se réduit par rapport à une zone environnant de la zone d'étanchéité (28a ; 28b),
l'au moins un premier élément de paroi (16a, 18a ; 16b) et l'au moins un deuxième élément de paroi (20, 22a ; 20b) chacun ayant dans la zone d'étanchéité (28a ; 28b) une surface de scellage (36a, 38a, 40a, 42a ; 36b, 40b) fournissant, en état monté, un effet d'étanchéité au gaz,
les au moins deux éléments de paroi (16a, 18a, 20a, 22a ; 16b, 20b) étant en contact direct l'un avec l'autre dans une proximité de la surface de scellage (36a, 38a, 40a, 42a ; 36b, 40b),
**caractérisé en ce que** le premier élément de paroi (16a, 18a) comporte un corps de base (54a, 56a) en forme de disque,
le contour scellant (32a, 34a) étant réalisé intégralement avec le corps de base (54a, 56a) et ayant une section transversale en forme trapézoïde qui est disposée dans une direction radiale, et le premier élément de paroi (16a, 18a) consistant en un matériau isolant d'électricité et le deuxième élément de paroi (20a, 22a) consistant en un matériau électro-conducteur ayant une haute limite d'étirage.

2. Dispositif à espace de fluide selon la revendication 1,
**caractérisé en ce que** les au moins deux éléments de paroi (16a, 18a, 20a, 22a ; 16b, 20b) aient un écart de maximalement 0.5 mm dans la zone d'étanchéité (28a ; 28b).

3. Dispositif à espace de fluide au moins selon l'une quelconque des revendications 1 ou 2,
**caractérisé en ce que** chacune des surfaces de scellage (36a, 38a, 40a, 42a ; 36b, 40b) est respectivement réalisée sensiblement en forme de rayure.

4. Dispositif à espace de fluide selon la revendication 3,
**caractérisé en ce que** les surfaces de scellage (36a, 38a, 40a, 42a ; 36b, 40b) présentent une largeur de maximalement 1 mm.

5. Dispositif à espace de fluide au moins selon l'une quelconque des revendications 1 ou 2,
**caractérisé par** au moins un élément partiel de tension fournissant une force de pression agissant sur les surfaces de scellage (36a, 38a, 40a, 42a ; 36b, 40b) pour un effet d'étanchéité à la pression.

6. Dispositif à espace de fluide selon la revendication 5,
**caractérisé par** au moins un élément écarteur (44a, 46a ; 44b) qui est disposé entre le premier élément de paroi (16a, 18a ; 16b) et le deuxième élément de paroi (20a, 22a ; 20b) et qui est prévu à limiter la force de pression agissant sur les surfaces de scellage (36a, 38a, 40a, 42a ; 36b, 40b).

7. Dispositif à espace de fluide au moins selon l'un quelconque des revendications 1 ou 2,
**caractérisé en ce que** l'au moins un contour scellant (32a, 34a ; 32b) est réalisé comme bombement de l'au moins un premier élément de paroi (16a, 18a ; 20b) ayant une crête (74a, 76a ; 74b) sur lequel est disposée la surface de scellage (40a, 42a ; 36b) de l'au moins un autre élément de paroi (20a, 22a ; 16b).

8. Dispositif à espace de fluide selon l'une quelconque des revendications précédentes,
**caractérisé en ce qu'**une extension principale des éléments de paroi (16a, 18a, 20a, 22a ; 16b, 20b) est au moins 30 fois une hauteur de l'espace de fluide (24a, 26a ; 24b).

9. Dispositif à espace de fluide selon l'une quelconque des revendications précédentes,
**caractérisé en ce qu'**au moins un des éléments de paroi (16a, 18a, 20a, 22a ; 16b, 20b) comporte une zone partielle perméable à fluide (48a, 50a).

10. Appareil redox avec au moins un premier dispositif à espace de fluide (10a ; 10b) et au moins un deuxième dispositif à espace de fluide (12a), chacun desdits dispositifs selon l'une quelconque des revendications précédentes.

11. Appareil redox selon la revendication 10,
**caractérisé en ce que** les dispositifs d'espace de fluide (10a, 12a ; 12b) sont disposés, dans une direction perpendiculaire à une extension principale, de telle manière qu'ils sont directement voisinés.

12. Appareil redox selon la revendication 10,
**caractérisé en ce que** les dispositifs d'espace de fluide (10a, 12a ; 12b) sont disposés, dans une direction perpendiculaire à une extension principale, de manière axisymétrique.
